# EUROPEAN PATENT SPECIFICATION

(11) **EP 4 194 244 B1**
(45) Date of publication and mention of the grant of the patent: **25.09.2024**
(21) Application number: 20962948.4
(22) Date of filing: 27.11.2020
(51) Int. Cl.: B60K 17/04, B60K 1/00, F16H 57/021

(54) **ELECTRIC DRIVE ASSEMBLY AND ELECTRIC VEHICLE**
ELEKTRISCHE ANTRIEBSANORDNUNG UND ELEKTROFAHRZEUG
ENSEMBLE D'ENTRAÎNEMENT ÉLECTRIQUE ET VÉHICULE ÉLECTRIQUE

(43) Date of publication of application: 14.06.2023
(73) Proprietor: Huawei Digital Power Technologies Co., Ltd., Shenzhen, Guangdong 518043 (CN)
(72) Inventor: HU, Xiong, Shenzhen, Guangdong 518129 (CN); ZHONG, Hu, Shenzhen, Guangdong 518129 (CN); WANG, Peng, Shenzhen, Guangdong 518129 (CN)
(74) Representative: Grünecker Patent- und Rechtsanwälte PartG mbB
(86) International application number: PCT/CN2020/132431
(87) International publication number: WO 2022/110058

(56) References cited:
- WO-A1-2013/183482
- WO-A1-2020/053420
- CN-A- 108 327 529
- CN-A- 108 674 179
- CN-A- 108 674 179
- CN-U- 210 970 636
- CN-U- 210 970 636
- CN-U- 211 693 446
- US-B2- 9 130 412

## Description

### TECHNICAL FIELD

This invention relates to the field of vehicle technologies, and in particular, to an electrical driving assembly and an electric vehicle.

### BACKGROUND

In the new energy industry, support forms of an input shaft of an electrical driving assembly mainly include a four-bearing support solution, a three-bearing support solution, and a two-bearing support solution. In the four-bearing support solution, two bearings are arranged on a motor shaft and two bearings are arranged on a reducer input shaft. However, a high-speed bearing is mostly used in the four-bearing support solution. As a result, costs are relatively high, and spline alignment is poor. In the two-bearing support solution, one bearing is distributed on each of the reducer input shaft and the motor shaft. As a result, the bearing spans an excessively long distance and deflection at a gear location is relatively large, which is prone to cause a problem such as NVH. In the three-bearing support solution, spline alignment and costs are better than those in the four-bearing support solution, and gear deflection is better than that in the two-bearing support solution. However, in an existing electrical driving assembly that uses the three-bearing support solution, an intermediate bearing is axially positioned by using a shaft shoulder on the reducer input shaft. As a result, a parking apparatus cannot be disposed in the electrical driving assembly.

CN210970636U discloses a common-end-cover electric drive assembly transmission system which comprises a motor shell, a motor stator, a motor rotor, a motor output shaft, a speed reducer front shell, a second bearing, a speed reducer input shaft, a third bearing, a fourth bearing, an intermediate shaft, an intermediate shaft gear, a differential mechanism, a speed reducer rear shell, a main speed reduction gear and an input set oil seal. A motor output shaft is connected with a speed reducer input shaft, an integrated gear on the speed reducer input shaft is meshed with an intermediate shaft gear, the intermediate shaft gear is connected with an intermediate shaft, the integrated gear on the intermediate shaft is meshed with a main reduction gear, and the main reduction gear is connected with a differential mechanism. The output shaft of the motor and the input shaft of the speed reducer share a second bearing which is located in the speed reducer.

### SUMMARY

Embodiments of this invention provide an electrical driving assembly and an electric vehicle, to be compatible with a parking apparatus.

According to a first aspect, this invention provides an electrical driving assembly, including a motor, a reducer, a first bearing, a second bearing, a third bearing, a first spacer or a second spacer. The reducer has a reducer input shaft, and the reducer input shaft includes a first end and a second end that are disposed opposite to each other. The motor has a motor shaft, and the motor shaft includes a third end and a fourth end that are disposed opposite to each other. The third end is inserted into the second end, the first bearing is disposed at the first end, the second bearing is disposed at the second end, the third bearing is disposed at the fourth end, and an axial length of the first spacer is greater than an axial length of the second spacer. When no parking apparatus is disposed on the reducer input shaft, the first spacer is disposed on the reducer input shaft and is in contact with an end face that is of the second bearing and that faces the first bearing; and when a parking apparatus is disposed on the reducer input shaft, the second spacer is disposed on the reducer input shaft, and the second spacer is located between the parking apparatus and the end face that is of the second bearing and that faces the first bearing.

The reducer input shaft provided in the first aspect of this invention is supported by using the first bearing and the second bearing, and the motor shaft is supported by using the third bearing. In other words, the electrical driving assembly supports the reducer input shaft and the motor shaft by using three bearings, which helps miniaturization and lightweight development of the electrical driving assembly. The electrical driving assembly is provided with the first spacer and the second spacer with different axial lengths. When no parking apparatus is disposed, the first spacer with a larger axial length is used; and when the parking apparatus needs to be disposed, the second spacer with a smaller axial length is used. In this way, the electrical driving assembly can be compatible with a case in which no parking apparatus is disposed and a case in which a parking apparatus is disposed, and manufacturers may select a spacer based on a requirement, to facilitate manufacturing and assembly of an electric vehicle.

According to the first aspect, in a first possible implementation of the first aspect, the electrical driving assembly further includes a positioning structure, and the positioning structure protrudes from an outer surface of the first end. The positioning structure is in contact with a side of the first bearing and that faces the second bearing, and is configured to axially position the first bearing.

According to the first aspect or the first possible implementation of the first aspect, in a second possible implementation of the first aspect, the electrical driving assembly further includes a first support component, a first end of the reducer input shaft penetrates the first support component, the first bearing is disposed on the first support component, and the first support component is configured to support the first bearing.

According to the first aspect or the first and the second possible implementations of the first aspect, in a third possible implementation of the first aspect, the first support component includes a first support portion and a first positioning portion protruding from an inner surface of the first support portion, the first bearing includes a first outer ring and a first inner ring rotatably accommodated in the first outer ring, the first end penetrates the first inner ring, a side that is of the first outer ring and that is away from the second bearing abuts against the first positioning portion, and the first positioning portion is configured to axially position the first bearing. In other words, the first bearing is disposed between the first positioning portion and the positioning structure, to reduce axial floating of the first bearing, thereby helping mitigate an NVH problem.

According to the first aspect or the first to the third possible implementations of the first aspect, in a fourth possible implementation of the first aspect, the electrical driving assembly further includes a second support component, a second end of the reducer input shaft penetrates the second support component, the second bearing is disposed on the second support component, and the second support component is configured to support the second bearing.

According to the first aspect or the first to the fourth possible implementations of the first aspect, in a fifth possible implementation of the first aspect, the second support component includes a second support portion and a second positioning portion protruding from an inner surface of the second support portion, the second bearing includes a second outer ring and a second inner ring rotatably accommodated in the second outer ring, the second end penetrates the second inner ring, a side that is of the second outer ring and that is away from the first bearing abuts against the second positioning portion, and the second positioning portion is configured to axially position the second bearing.

According to the first aspect or the first to the fifth possible implementations of the first aspect, in a sixth possible implementation of the first aspect, the electrical driving assembly further includes a third support component, the fourth end of the motor shaft penetrates the third support component, and the third bearing is disposed on the third support component. The third support component is configured to support the third bearing.

According to the first aspect or the first to the sixth possible implementations of the first aspect, in a seventh possible implementation of the first aspect, the third support component includes a third support portion and a third positioning portion protruding from an inner surface of the third support portion, the third bearing includes a third outer ring and a third inner ring rotatably accommodated in the third outer ring, and the fourth end penetrates the third inner ring. The electrical driving assembly further includes an elastic component, and the elastic component is connected between the third positioning portion and a side that is of the third outer ring and that is away from the second bearing. The elastic component is configured to preload the third bearing on the third support portion.

According to the first aspect or the first to the seventh possible implementations of the first aspect, in an eighth possible implementation of the first aspect, the second end is provided with a shaft hole in an axial direction, and the third end is inserted into the shaft hole. The electrical driving assembly further includes a circlip, and the circlip is sandwiched between an inner surface of the shaft hole and an outer surface of the third end, to reduce adverse effects (especially a relatively large impact load) brought by axial movement of the motor shaft, thereby further mitigating an NVH problem. In addition, because the circlip can reduce axial movement of the motor shaft, a service life of the elastic component can be prolonged. Moreover, the circlip has a simple structure and is easy to assemble.

According to the first aspect or the first to the eighth possible implementations of the first aspect, in a ninth possible implementation of the first aspect, an internal spline is disposed on the inner surface of the shaft hole, an external spline is disposed on the outer surface of the third end, and the internal spline is connected to the external spline, so that the second end is connected to the third end through the spline to transfer a torque.

According to the first aspect or the first to the ninth possible implementations of the first aspect, in a tenth possible implementation of the first aspect, the second end of the reducer input shaft is provided with a first groove, the outer surface of the third end of the motor shaft is provided with a second groove corresponding to the first groove, and the circlip is accommodated in accommodation space jointly formed by the first groove and the second groove. Disposing of the first groove and the second groove facilitates assembly of the circlip.

According to a second aspect, this invention provides an electric vehicle, including the electrical driving assembly according to the first aspect or the first to the tenth possible implementations of the first aspect.

### DESCRIPTION OF DRAWINGS

FIG. 1 is a block diagram of a structure of an electric vehicle according to an implementation of this invention;
FIG. 2 is a cutaway view of an electrical driving assembly that is not provided with a parking apparatus according to an implementation of this invention;
FIG. 3 is a cutaway view in which a parking apparatus is disposed in the electrical driving assembly shown in FIG. 2;
FIG. 4 is a cutaway view of an electrical driving assembly that is not provided with a parking apparatus according to another implementation of this invention; and
FIG. 5 is a cutaway view in which a parking apparatus is disposed in the electrical driving assembly shown in FIG. 4.

### DESCRIPTION OF EMBODIMENTS

To make the objectives, technical solutions, and advantages of this invention clearer, the following further describes this invention in detail with reference to the accompanying drawings.

In addition, in this application, the description "and/or" includes any combination and all combinations associated with listed words. For example, the description "A and/or B" may include A, may include B, or may include both A and B.

In this application, descriptions including ordinal numbers such as "first" and "second" may modify each element. However, this element is not limited by the foregoing description. For example, the foregoing description does not limit an order and/or importance of elements. The foregoing description is only used to distinguish one element from another element. For example, first user equipment and second user equipment indicate different user equipment, although the first user equipment and the second user equipment each are user equipment. Similarly, without departing from the scope of this application, a first element may be referred to as a second element, and similarly, the second element may be referred to as the first element.

When a component is "connected to" or "accesses" another component, it should be understood that the component is not only directly connected to or accesses the another component, but there may be also another component between the component and the another component. In another aspect, when a component is "directly connected to" or "directly accesses" another component, it should be understood that there is no component between the components.

Embodiments of this invention provide an electrical driving assembly and an electric vehicle having the electrical driving assembly. An input shaft (a reducer input shaft and a motor shaft) of the electrical driving assembly uses a three-bearing support solution and can be compatible with a parking apparatus, which helps manufacturing of the electric vehicle.

The electric vehicle includes a battery electric vehicle (BEV), a hybrid electric vehicle (HEV), and a plug-in hybrid electric vehicle (PHEV,).

The battery electric vehicle includes a motor, and an energy source of the motor is a power battery. The power battery of the battery electric vehicle can be recharged from an external power grid. The power battery of the battery electric vehicle is actually the only source of on-board energy used for vehicle propulsion.

The hybrid electric vehicle includes an internal combustion engine and a motor. An energy source of the engine is fuel, and an energy source of the motor is a power battery. The engine is a main source of energy used for vehicle propulsion, and the power battery of the hybrid electric vehicle provides supplementary energy used for vehicle propulsion (the power battery of the hybrid electric vehicle buffers fuel energy and recovers kinetic energy in an electrical form).

A difference between the plug-in hybrid electric vehicle and the hybrid electric vehicle lies in the following: A power battery of the plug-in hybrid electric vehicle has a larger capacity than the power battery of the hybrid electric vehicle, and the power battery of the plug-in hybrid electric vehicle can be recharged from a power grid. The power battery of the plug-in hybrid electric vehicle is a main source of energy used for vehicle propulsion until the power battery of the plug-in hybrid electric vehicle is lost to a low energy level. In this case, the plug-in hybrid electric vehicle operates like the hybrid electric vehicle used for vehicle propulsion.

The following describes embodiments of this invention with reference to the accompanying drawings. In embodiments of this invention, a battery electric vehicle is used as an example to describe a structure of an electric vehicle.

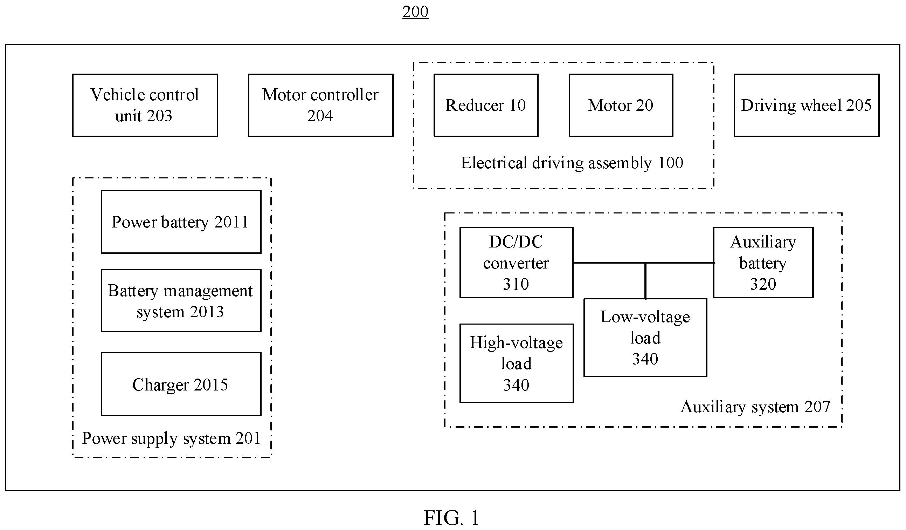

Refer to FIG. 1. This invention provides an electric vehicle 200. The electric vehicle 200 includes a power supply system 201, an electrical driving assembly 100, a vehicle control unit 203, a motor controller 204, driving wheels 205, and an auxiliary system 207. The power supply system 201 includes a power battery 2011, a battery management system 2013, and a charger 2015. The electrical driving assembly 100 includes a motor 20 and a reducer 10 mechanically connected to the motor 20. The reducer 10 is further mechanically connected to the driving wheels 205, and is configured to transfer, to the driving wheels 205, a power source generated by the motor 20, to drive the electric vehicle 200 to travel.

The vehicle control unit (VCU) 203, also referred to as a power assembly controller, is a core control component of an entire vehicle and is equivalent to a brain of the vehicle. The vehicle control unit collects an accelerator pedal signal, a brake pedal signal, and another component signal, and controls an action of each component controller in a lower layer after performing corresponding determining, to drive the vehicle to travel normally. As a command and management center of the vehicle, main functions of the vehicle control unit include: driving torque control, optimization control of braking energy, energy management of the entire vehicle, maintenance and management of a CAN (Controller Area Network), fault diagnosis and processing, vehicle status monitoring, and the like. The vehicle control unit plays a role in controlling vehicle running. Therefore, quality of the vehicle control unit directly determines stability and security of the vehicle.

The motor controller 204 is an integrated circuit that actively works to control the motor 20 in the electrical driving assembly 100 to work based on a specified direction, speed, angle, and response time, and is communicatively connected to the vehicle control unit 203. In the electric vehicle 200, a function of the motor controller 204 is to convert, based on an instruction from such as a gear, an accelerator, or a brake, electric energy stored in the power battery 2011 into electric energy required by the motor, to control a driving status of the electric vehicle 200 such as starting and running, a driving speed and a reversing speed, and slope climbing force, or to help brake the electric vehicle 200 and store some braking energy in the power battery 2011.

The motor is an electromagnetic apparatus that implements power conversion or transfer according to an electromagnetic induction law, and is electrically connected to the motor controller 204 and mechanically connected to the reducer 10. A main function of the motor is to generate a driving torque as a power source for the driving wheels 205. In some embodiments, the motor may further convert mechanical energy into electric energy, that is, the motor is used as a generator.

Specifically, the motor 20 may be a motor of a permanent-magnet synchronous motor (PMSM) type. The motor 20 may include a stator and a motor shaft, and the stator includes a stator winding. The motor shaft may rotate around a central axis relative to the stator. The motor may be controlled by enabling a common sinusoidal current to flow through the stator winding. An amplitude and a frequency of the current may be changed to control a torque and a rotational speed of a rotor. A current of the stator generates an electromagnetic field, and the electromagnetic field interacts with a permanent magnet that serves as a component of the rotor. The electromagnetic field enables the motor shaft to rotate.

For example, the motor 20 may be a three-phase motor. In other words, the stator winding may include three separated phase windings. To control the motor, a three-phase voltage wave or a three-phase current wave is applied to the phase winding. The three-phase wave enables signals of the phases to be separated from each other based on a phase difference of 120 degrees.

The power battery 2011 is electrically connected to the motor controller 204, and is configured to store and provide electric energy. The power battery 2011 includes but is not limited to a lead-acid battery, a lithium iron phosphate battery, a nickel metal hydride battery, a nickel-cadmium battery, and the like. In some embodiments, the power battery 2011 may further include a super capacitor.

The battery management system 2013 is electrically connected to the power battery 2011, and is communicatively connected to the vehicle control unit 203. The battery management system 2013 is configured to monitor and estimate a status of the power battery 2011 in different working conditions, to improve utilization of the power battery 2011, and prevent overcharging and overdischarging of the power battery 2011. In this way, a service life of the power battery 2011 is prolonged. Specifically, main functions of the battery management system 2013 may include: real-time monitoring of a physical parameter of a battery, battery status estimation, online diagnosis and warning, charging and discharging control and pre-charging control, balance management, heat management, and the like.

The charger 2015 is electrically connected to the power battery 2011, and is configured to connect to an external power supply to charge the power battery 2011. Specifically, when the electric vehicle 200 is connected to an external power supply (such as a charging pile), the charger 2015 converts an alternating current provided by the external power supply into a direct current to charge the power battery 2011. In addition, the battery management system 2013 is further connected to the charger 2015 to monitor a charging process of the power battery 2011.

The auxiliary system 207 includes a DC/DC converter 310, an auxiliary battery 320, a low-voltage load 330, and a high-voltage load 340. One end of the DC/DC converter 310 is connected to the power battery 2011, and the other end is separately connected to the auxiliary battery 320 and the low-voltage load 330. The DC/DC converter 310 is configured to convert high voltage (such as 380 V) output by the power battery 2011 into low voltage (such as 12 V), and then charge the auxiliary battery 320 and supply power to the low-voltage load 330 by using the low voltage. In some implementations, the low-voltage load 330 includes a low-voltage vehicle accessory such as a cooling pump, a fan, a heater, a power steering apparatus, or a brake. Certainly, the auxiliary battery 320 may also supply power to the low-voltage load 330. In addition, the power battery 2011 is further connected to the high-voltage load 340 to supply power to the high-voltage load 340. In some implementations, the high-pressure load 340 includes a PTC heater, an air conditioning unit, and the like.

It should be noted that an electronic module in the electric vehicle 200 may perform communication by using one or more vehicle networks. The vehicle network may include a plurality of channels used for communication. A channel of the vehicle network may be, for example, a serial bus of a controller area network (CAN). One of the channels of the vehicle network may include Ethernet defined by the Institute of Electrical and Electronic Engineers (IEEE) 802 standard family. Another channel of the vehicle network may include discrete connection between modules, and may include an electrical signal from thepower battery 2011. Different signals may be transmitted by using different channels of the vehicle network. For example, a video signal may be transmitted by using a high-speed channel (for example, Ethernet), and a control signal may be transmitted by using a CAN or a discrete signal. The vehicle network may include any hardware component and any software components that assist in transmitting a signal and data between modules. The vehicle network is not shown in FIG. 1, but it may be implied that the vehicle network may be connected to any electronic module present in the electric vehicle 200. For example, the vehicle control unit 203 may exist to coordinate operations of the components.

It may be understood that the structure shown in this embodiment of this invention does not constitute a specific limitation on the electronic device 200. In some other embodiments of this invention, the mobile phone 200 may include more or fewer components than those shown in the figure, combine some components, divide some components, or have different component arrangements. The components in the figure may be implemented by hardware, software, or a combination of software and hardware.

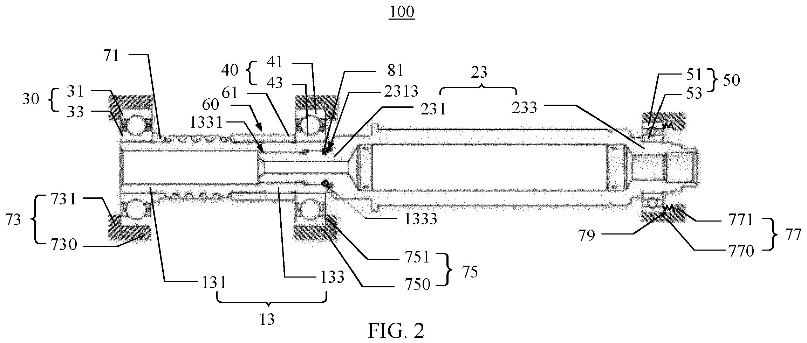

Refer to FIG. 2. The electrical driving assembly 100 further includes a first bearing 30, a second bearing 40, a third bearing 50, and a spacer 60. The reducer 10 has a reducer input shaft 13. The reducer input shaft 13 includes a first end 131 and a second end 133 that are disposed opposite to each other. The motor 20 has a motor shaft 23. The motor shaft 23 includes a third end 231 and a fourth end 233 that are disposed opposite to each other. The third end 231 is inserted into the second end 133. The first bearing 30 is disposed at the first end 131, and is configured to support the first end 131. The second bearing 40 is disposed at the second end 133, and is configured to support the second end 133. The third bearing 50 is disposed at the fourth end 233, and is configured to support the fourth end 233. The spacer 60 is disposed outside the reducer input shaft 13 and is in contact with an end face that is of the second bearing 40 and that is close to the first bearing 30, and is configured to axially position the second bearing 40, thereby facilitating assembly of the electrical driving assembly 100. In addition, the reducer input shaft 13 is supported by using the first bearing 30 and the second bearing 40, and the motor shaft 23 is supported by using the third bearing 50. In other words, the electrical driving assembly 100 supports the reducer input shaft 13 and the motor shaft 23 by using three bearings, which helps miniaturization and lightweight development of the electrical driving assembly 100. It may be understood that the reducer 10 further includes an output shaft (not shown in the figure), and the output shaft of the reducer 10 is connected to the driving wheels 205, and is configured to transfer, to the driving wheels 205, power generated by the motor 20.

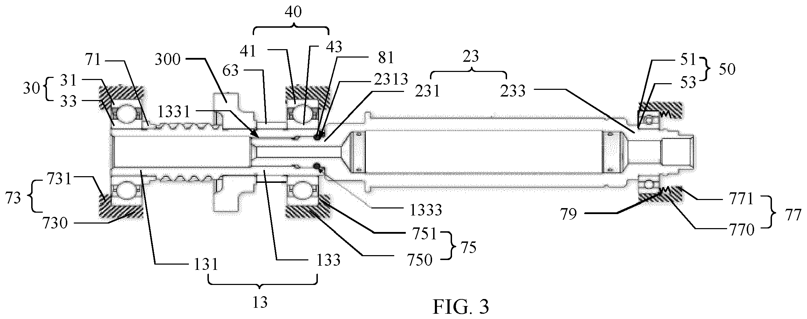

The spacer 60 includes a first spacer 61 and a second spacer 63 (as shown in FIG. 3), and an axial length of the first spacer 61 is greater than an axial length of the second spacer 63. When no parking apparatus is disposed on the reducer input shaft 13 of the electric vehicle 200, the first spacer 61 is disposed on the reducer input shaft 13 and is in contact with the end face that is of the second bearing 40 and that is close to the first bearing 30.

Refer to FIG. 3. The electric vehicle 200 further includes a parking apparatus 300 disposed on the reducer input shaft 13, and the second spacer 63 is located between the parking apparatus 300 and the second bearing 40. The parking apparatus 300 is configured to prevent rotation of the reducer input shaft 13, that is, the parking apparatus 300 may hold the reducer input shaft 13 tightly, to prevent the electric vehicle 200 from slipping after the vehicle stops. In addition, in an emergency case, the parking apparatus 300 may cooperate with a driving braking apparatus (not shown in the figure) to perform emergency braking.

According to the electrical driving assembly 100 provided in this implementation of this invention, when the parking apparatus 300 does not need to be disposed on the reducer input shaft 13, the first spacer 61 is disposed at the second end 133 of the reducer input shaft 13, that is, the first spacer 61 with a larger axial length is used. However, when the parking apparatus 300 is disposed on the reducer input shaft 13, the second spacer 63 is disposed on the reducer input shaft 13. In this way, the electrical driving assembly 100 can be compatible with a case in which the parking apparatus 300 is disposed and a case in which the parking apparatus 300 is not disposed, and manufacturers may select a spacer based on a requirement, to facilitate manufacturing and assembly of the electric vehicle 200.

Refer to FIG. 2 again. The second end 133 of the reducer input shaft 13 is provided with a shaft hole 1331 extending axially, and an internal spline (not shown in the figure) is disposed on an inner surface of the shaft hole 1331. An external spline (not shown in the figure) is disposed on an outer surface of the third end 231 of the motor shaft 23. The internal spline is cooperatively connected to the external spline, so that the second end 133 of the reducer input shaft 13 is connected to the third end 231 of the motor shaft 23 through the spline, to transfer a torque. An inner surface of the second end 133 of the reducer input shaft 13 includes a first cylindrical face, the outer surface of the third end 231 of the motor shaft 23 includes a second cylindrical face, and the first cylindrical face cooperates with the second cylindrical face to perform radial positioning, thereby improving stability of connection between the motor shaft 23 and the reducer input shaft 13.

The electrical driving assembly 100 further includes a positioning structure 71. The positioning structure 71 protrudes from an outer surface of the first end 131, the positioning structure 71 is in contact with a side that is of the first bearing 30 and that faces the second bearing 40, and the positioning structure 71 is configured to axially position the first bearing 30. The positioning structure 71 may be a shaft shoulder protruding from the outer surface of the first end 131. The positioning structure 71 may alternatively be a spacer or a sleeve.

The electrical driving assembly 100 further includes a first support component 73. The first end 131 of the reducer input shaft 13 penetrates the first support component 73, and the first bearing 30 is disposed on the first support component 73. The first support component 73 is configured to support the reducer 10 and the first bearing 30. The first support component 73 includes a first support portion 730 and a first positioning portion 731 protruding from an inner surface of the first support portion 730. The first bearing 30 includes a first outer ring 31 and a first inner ring 33, and the first outer ring 31 is fixedly connected to the first support portion 730. The first inner ring 33 is rotatably accommodated in the first outer ring 31. The first end 131 penetrates the first inner ring 33. A side that is of the first outer ring 31 and that is away from the second bearing 40 abuts against the first positioning portion 731. The first positioning portion 731 is configured to position the first bearing 30.

The electrical driving assembly 100 further includes a second support component 75. The second end 133 of the reducer input shaft 13 penetrates the second support component 75, and the second bearing 40 is disposed on the second support component 75. The second support component 75 is configured to support the reducer 10 and the second bearing 40. The second support component 75 includes a second support portion 751 and a second positioning portion 753 protruding from an inner surface of the second support portion 751. The second positioning portion 751 is configured to position the second bearing 40. The second bearing 40 includes a second outer ring 41 and a second inner ring 43. The second outer ring 41 is fastened to the second support portion 750. The second inner ring 43 is rotatably accommodated in the second outer ring 41. The second end 133 penetrates the second inner ring 43. A side that is of the second outer ring 41 and that faces the first bearing 30 abuts against the second positioning portion 751.

The electrical driving assembly 100 further includes a third support component 77, configured to support the third bearing 50. A third positioning portion 771 is disposed on the third support component 77, and is configured to position the third bearing 50. The third bearing 50 includes a third outer ring 51 and a third inner ring 53, and the third outer ring 51 is fastened to the third support component 77. The third inner ring 53 is rotatably accommodated in the third outer ring 51. The fourth end 233 penetrates the third inner ring 53.

The electrical driving assembly 100 further includes an elastic component 79, and the elastic component 79 is connected between the third positioning portion 771 and a side that is of the third outer ring 51 and that is away from the second bearing 40. The elastic component 79 is configured to preload the third bearing 50 on the third support component 77.

The electrical driving assembly 100 further includes a circlip 81, and the circlip 81 is sandwiched between the inner surface of the shaft hole 1331 at the second end 133 and the outer surface of the third end 231, and is configured to axially position the third end 231 of the motor shaft 23 and the reducer input shaft 13, to reduce adverse effects (especially a relatively large impact load) caused by axial movement of the motor shaft 23, thereby further mitigating an NVH problem. In addition, because the circlip 81 can reduce axial movement of the motor shaft 23, a service life of the elastic component 79 can be prolonged. Moreover, the circlip has a simple structure and is easy to assemble.

The second end 133 of the reducer input shaft 13 is provided with a first groove 1333, the outer surface of the third end 231 of the motor shaft 23 is provided with a second groove 2313 corresponding to the first groove 1333, and the circlip 81 is accommodated in accommodation space jointly formed by the first groove 1333 and the second groove 2313. Disposing of the first groove 1333 and the second groove 2313 facilitates assembly of the circlip 81. In this implementation, the circlip 81 is a circular opening circlip.

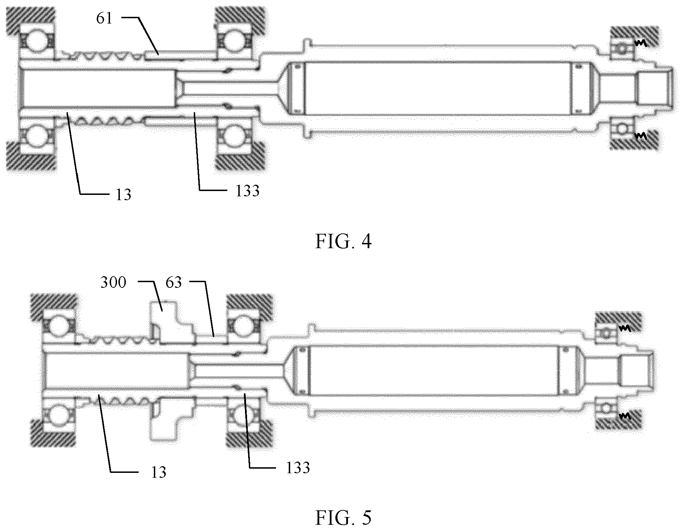

It may be understood that the circlip 81 may be omitted from the electrical driving assembly 100. Refer to FIG. 4 and FIG. 5. FIG. 4 is a schematic diagram in which the first spacer 61 is disposed on the reducer input shaft 13 when a parking apparatus does not need to be disposed on the reducer input shaft 13 of the electrical driving assembly 100, and FIG. 5 is a schematic diagram in which the second spacer 63 is disposed at the second end 133 of the reducer input shaft 13 when the parking apparatus 300 is disposed on the reducer input shaft 13.

## Claims

1. An electrical driving assembly (100), comprising a motor (20), a reducer (10), a first bearing (30), a second bearing (40), a third bearing (50), a first spacer (61), or a second spacer (63), wherein the reducer (10) has a reducer input shaft (13), and the reducer input shaft (13) comprises a first end (131) and a second end (133) that are disposed opposite to each other; the motor (20) has a motor shaft (23), and the motor shaft (23) comprises a third end (231) and a fourth end (233) that are disposed opposite to each other; and the third end (231) is inserted into the second end (133), the first bearing (30) is disposed at the first end (131), the second bearing (40) is disposed at the second end (133), the third bearing (50) is disposed at the fourth end (233), and an axial length of the first spacer (61) is greater than an axial length of the second spacer (63);
when no parking apparatus is disposed on the reducer input shaft (13), the first spacer (61) is disposed on the reducer input shaft (13) and is in contact with an end face that is of the second bearing (40) and that faces the first bearing (30); and
when a parking apparatus (300) is disposed on the reducer input shaft (13), the second spacer (63) is disposed on the reducer input shaft (13), and the second spacer (63) is located between the parking apparatus (300) and the end face that is of the second bearing (40) and that faces the first bearing (30).

2. The electrical driving assembly according to claim 1, wherein the electrical driving assembly (100) further comprises a positioning structure (71), the positioning structure (71) protrudes from an outer surface of the first end (131), and the positioning structure (71) is in contact with a side that is of the first bearing (30) and that faces the second bearing (40).

3. The electrical driving assembly according to claim 2, wherein the electrical driving assembly (100) further comprises a first support component (73), the first end (131) of the reducer input shaft (13) penetrates the first support component (73), and the first bearing (30) is disposed on the first support component (73).

4. The electrical driving assembly according to claim 3, wherein the first support component (73) comprises a first support portion (730) and a first positioning portion (731) protruding from an inner surface of the first support portion (730); and
the first bearing (30) comprises a first outer ring (31) and a first inner ring (33) rotatably accommodated in the first outer ring (31), the first end (131) penetrates the first inner ring (33), and a side that is of the first outer ring (31) and that is away from the second bearing (40) abuts against the first positioning portion (731).

5. The electrical driving assembly according to any one of claims 1 to 4, wherein the electrical driving assembly (100) further comprises a second support component (75), the second end (133) of the reducer input shaft (13) penetrates the second support component (75), and the second bearing (40) is disposed on the second support component (75).

6. The electrical driving assembly according to claim 5, wherein the second support component (75) comprises a second support portion (751) and a second positioning portion (753) protruding from an inner surface of the second support portion (751); and
the second bearing (40) comprises a second outer ring (41) and a second inner ring (43) rotatably accommodated in the second outer ring (41), the second end (133) penetrates the second inner ring (43), and a side that is of the second outer ring (41) and that is away from the first bearing (30) abuts against the second positioning portion (753).

7. The electrical driving assembly according to any one of claims 1 to 6, wherein the electrical driving assembly (100) further comprises a third support component (77), the fourth end (233) of the motor shaft (23) penetrates the third support component (77), and the third bearing (50) is disposed on the third support component (77).

8. The electrical driving assembly according to claim 7, wherein the third support component (77) comprises a third support portion and a third positioning portion (771) protruding from an inner surface of the third support portion; and
the third bearing (50) comprises a third outer ring (51) and a third inner ring (53) rotatably accommodated in the third outer ring (51), the fourth end (233) penetrates the third inner ring (53), the electrical driving assembly (100) further comprises an elastic component (79), and the elastic component (79) is connected between the third positioning portion (771) and a side that is of the third outer ring (51) and that is away from the second bearing (40).

9. The electrical driving assembly according to claim 8, wherein the second end (133) is provided with a shaft hole (1331) in an axial direction, the third end (231) is inserted into the shaft hole (1331), the electrical driving assembly (100) further comprises a circlip (81), and the circlip (81) is sandwiched between an inner surface of the shaft hole (1331) and an outer surface of the third end (231).

10. The electrical driving assembly according to claim 9, wherein an internal spline is disposed on the inner surface of the shaft hole (1331), an external spline is disposed on the outer surface of the third end (231), and the internal spline is connected to the external spline.

11. An electric vehicle (200), comprising the electrical driving assembly (100) according to any one of claims 1 to 10.

## Patentansprüche

1. Elektrische Antriebsanordnung (100), umfassend einen Motor (20), ein Untersetzungsgetriebe (10), ein erstes Lager (30), ein zweites Lager (40), ein drittes Lager (50), ein erstes Abstandsstück (61) oder ein zweites Abstandsstück (63), wobei das Untersetzungsgetriebe (10) eine Untersetzungsgetriebe-Eingangswelle (13) aufweist und die Untersetzungsgetriebe-Eingangswelle (13) ein erstes Ende (131) und ein zweites Ende (133) umfasst, die einander gegenüberliegend angeordnet sind; der Motor (20) eine Motorwelle (23) aufweist und die Motorwelle (23) ein drittes Ende (231) und ein viertes Ende (233) umfasst, die einander gegenüberliegend angeordnet sind; und das dritte Ende (231) in das zweite Ende (133) eingesetzt ist, das erste Lager (30) am ersten Ende (131) angeordnet ist, das zweite Lager (40) am zweiten Ende (133) angeordnet ist, das dritte Lager (50) am vierten Ende (233) angeordnet ist und eine axiale Länge des ersten Abstandstücks (61) größer ist als eine axiale Länge des zweiten Abstandstücks (63);
wenn keine Parkvorrichtung auf der Untersetzungsgetriebe-Eingangswelle (13) angeordnet ist, das erste Abstandsstück (61) auf der Untersetzungsgetriebe-Eingangswelle (13) angeordnet ist und mit einer Endfläche in Kontakt steht, die zum zweiten Lager (40) gehört und dem ersten Lager (30) zugewandt ist; und
wenn eine Parkvorrichtung (300) auf der Untersetzungsgetriebe-Eingangswelle (13) angeordnet ist, das zweite Abstandsstück (63) auf der Untersetzungsgetriebe-Eingangswelle (13) angeordnet ist und sich das zweite Abstandsstück (63) zwischen der Parkvorrichtung (300) und der Endfläche befindet, die zum zweiten Lager (40) gehört und dem ersten Lager (30) zugewandt ist.

2. Elektrische Antriebsanordnung nach Anspruch 1, wobei die elektrische Antriebsanordnung (100) ferner eine Positionierungsstruktur (71) umfasst, die Positionierungsstruktur (71) von einer Außenfläche des ersten Endes (131) vorsteht und die Positionierungsstruktur (71) mit einer Seite in Kontakt steht, die zum ersten Lager (30) gehört und dem zweiten Lager (40) zugewandt ist.

3. Elektrische Antriebsanordnung nach Anspruch 2, wobei die elektrische Antriebsanordnung (100) ferner eine erste Stützkomponente (73) umfasst, das erste Ende (131) der Untersetzungsgetriebe-Eingangswelle (13) die erste Stützkomponente (73) durchdringt und das erste Lager (30) auf der ersten Stützkomponente (73) angeordnet ist.

4. Elektrische Antriebsanordnung nach Anspruch 3, wobei die erste Stützkomponente (73) einen ersten Stützabschnitt (730) und einen ersten Positionierungsabschnitt (731) umfasst, der von einer Innenfläche des ersten Stützabschnitts (730) vorsteht; und das erste Lager (30) einen ersten Außenring (31) und einen ersten Innenring (33) umfasst, der drehbar im ersten Außenring (31) aufgenommen ist, das erste Ende (131) den ersten Innenring (33) durchdringt und eine Seite, die zum ersten Außenrings (31) gehört und vom zweiten Lager (40) entfernt ist, an den ersten Positionierungsabschnitt (731) angrenzt.

5. Elektrische Antriebsanordnung nach einem der Ansprüche 1 bis 4, wobei die elektrische Antriebsanordnung (100) ferner eine zweite Stützkomponente (75) umfasst, das zweite Ende (133) der Untersetzungsgetriebe-Eingangswelle (13) die zweite Stützkomponente (75) durchdringt und das zweite Lager (40) auf der zweiten Stützkomponente (75) angeordnet ist.

6. Elektrische Antriebsanordnung nach Anspruch 5, wobei die zweite Stützkomponente (75) einen zweiten Stützabschnitt (751) und einen zweiten Positionierungsabschnitt (753) umfasst, der von einer Innenfläche des zweiten Stützabschnitts (751) vorsteht; und
das zweite Lager (40) einen zweiten Außenring (41) und einen zweiten Innenring (43) umfasst, der drehbar im zweiten Außenring (41) aufgenommen ist, das zweite Ende (133) den zweiten Innenring (43) durchdringt und eine Seite, die zum zweiten Außenring (41) gehört und vom ersten Lager (30) weg weist, an den zweiten Positionierungsabschnitt (753) angrenzt.

7. Elektrische Antriebsanordnung nach einem der Ansprüche 1 bis 6, wobei die elektrische Antriebsanordnung (100) ferner eine dritte Stützkomponente (77) umfasst, das vierte Ende (233) der Motorwelle (23) die dritte Stützkomponente (77) durchdringt und das dritte Lager (50) auf der dritten Stützkomponente (77) angeordnet ist.

8. Elektrische Antriebsanordnung nach Anspruch 7, wobei die dritte Stützkomponente (77) einen dritten Stützabschnitt und einen dritten Positionierungsabschnitt (771) umfasst, der von einer Innenfläche des dritten Stützabschnitts vorsteht; und
das dritte Lager (50) einen dritten Außenring (51) und einen dritten Innenring (53) umfasst, der drehbar im dritten Außenring (51) aufgenommen ist, das vierte Ende (233) den dritten Innenring (53) durchdringt, die elektrische Antriebsanordnung (100) ferner eine elastische Komponente (79) umfasst und die elastische Komponente (79) zwischen dem dritten Positionierungsabschnitt (771) und einer Seite, die zum dritten Außenring (51) gehört und vom zweiten Lager (40) entfernt ist, verbunden ist.

9. Elektrische Antriebsanordnung nach Anspruch 8, wobei das zweite Ende (133) in axialer Richtung mit einem Wellenloch (1331) bereitgestellt ist, das dritte Ende (231) in das Wellenloch (1331) eingesetzt ist, die elektrische Antriebsanordnung (100) ferner einen Sicherungsring (81) umfasst und der Sicherungsring (81) zwischen einer Innenfläche des Wellenlochs (1331) und einer Außenfläche des dritten Endes (231) eingeklemmt ist.

10. Elektrische Antriebsanordnung nach Anspruch 9, wobei eine Innenverzahnung an der Innenfläche des Wellenlochs (1331) angeordnet ist, eine Außenverzahnung an der Außenfläche des dritten Endes (231) angeordnet ist und die Innenverzahnung mit der Außenverzahnung verbunden ist.

11. Elektrofahrzeug (200), umfassend die elektrische Antriebsanordnung (100) nach einem der Ansprüche 1 bis 10.

## Revendications

1. Ensemble d'entraînement électrique (100), comprenant un moteur (20), un réducteur (10), un premier palier (30), un deuxième palier (40), un troisième palier (50), une première entretoise (61), ou une seconde entretoise (63), dans lequel le réducteur (10) présente un arbre d'entrée de réducteur (13), et l'arbre d'entrée de réducteur (13) comprend une première extrémité (131) et une deuxième extrémité (133) qui sont disposées l'une à l'opposé de l'autre ; le moteur (20) possède un arbre moteur (23), et l'arbre moteur (23) comprend une troisième extrémité (231) et une quatrième extrémité (233) qui sont disposées l'une à l'opposé de l'autre ; et la troisième extrémité (231) est insérée dans la deuxième extrémité (133), le premier palier (30) est disposé au niveau de la première extrémité (131), le deuxième palier (40) est disposé au niveau de la deuxième extrémité (133), le troisième palier (50) est disposé au niveau de la quatrième extrémité (233), et une longueur axiale de la première entretoise (61) est supérieure à une longueur axiale de la seconde entretoise (63) ;
lorsqu'aucun appareil de stationnement n'est disposé sur l'arbre d'entrée de réducteur (13), la première entretoise (61) est disposée sur l'arbre d'entrée de réducteur (13) et est en contact avec une face d'extrémité qui appartient au deuxième palier (40) et qui fait face au premier palier (30) ; et
lorsqu'un appareil de stationnement (300) est disposé sur l'arbre d'entrée de réducteur (13), la seconde entretoise (63) est disposée sur l'arbre d'entrée de réducteur (13), et la seconde entretoise (63) est située entre l'appareil de stationnement (300) et la face d'extrémité qui appartient au deuxième palier (40) et qui fait face au premier palier (30).

2. Ensemble d'entraînement électrique selon la revendication 1, dans lequel l'ensemble d'entraînement électrique (100) comprend également une structure de positionnement (71), la structure de positionnement (71) fait saillie à partir d'une surface externe de la première extrémité (131), et la structure de positionnement (71) est en contact avec un côté qui appartient au premier palier (30) et qui fait face au deuxième palier (40).

3. Ensemble d'entraînement électrique selon la revendication 2, dans lequel l'ensemble d'entraînement électrique (100) comprend également un premier composant de support (73), la première extrémité (131) de l'arbre d'entrée de réducteur (13) pénètre dans le premier composant de support (73), et le premier palier (30) est disposé sur le premier composant de support (73).

4. Ensemble d'entraînement électrique selon la revendication 3, dans lequel le premier composant de support (73) comprend une première partie de support (730) et une première partie de positionnement (731) faisant saillie à partir d'une surface interne de la première partie de support (730) ; et
le premier palier (30) comprend une première bague externe (31) et une première bague interne (33) logée de manière rotative dans la première bague externe (31), la première extrémité (131) pénètre dans la première bague interne (33), et un côté qui appartient à la première bague externe (31) et qui est éloigné du deuxième palier (40) vient en butée contre la première partie de positionnement (731).

5. Ensemble d'entraînement électrique selon l'une quelconque des revendications 1 à 4, dans lequel l'ensemble d'entraînement électrique (100) comprend également un deuxième composant de support (75), la deuxième extrémité (133) de l'arbre d'entrée de réducteur (13) pénètre dans le deuxième composant de support (75), et le deuxième palier (40) est disposé sur le deuxième composant de support (75).

6. Ensemble d'entraînement électrique selon la revendication 5, dans lequel le deuxième composant de support (75) comprend une deuxième partie de support (751) et une deuxième partie de positionnement (753) faisant saillie à partir d'une surface interne de la deuxième partie de support (751) ; et
le deuxième palier (40) comprend une deuxième bague externe (41) et une deuxième bague interne (43) logée de manière rotative dans la deuxième bague externe (41), la deuxième extrémité (133) pénètre dans la deuxième bague interne (43), et un côté qui appartient à la deuxième bague externe (41) et qui est éloigné du premier palier (30) vient en butée contre la deuxième partie de positionnement (753).

7. Ensemble d'entraînement électrique selon l'une quelconque des revendications 1 à 6, dans lequel l'ensemble d'entraînement électrique (100) comprend également un troisième composant de support (77), la quatrième extrémité (233) de l'arbre de moteur (23) pénètre dans le troisième composant de support (77), et le troisième palier (50) est disposé sur le troisième composant de support (77).

8. Ensemble d'entraînement électrique selon la revendication 7, dans lequel le troisième composant de support (77) comprend une troisième partie de support et une troisième partie de positionnement (771) faisant saillie à partir d'une surface interne de la troisième partie de support ; et
le troisième palier (50) comprend une troisième bague externe (51) et une troisième bague interne (53) logée de manière rotative dans la troisième bague externe (51), la quatrième extrémité (233) pénètre dans la troisième bague interne (53), l'ensemble d'entraînement électrique (100) comprend également un composant élastique (79), et le composant élastique (79) est relié entre la troisième partie de positionnement (771) et un côté qui appartient à la troisième bague externe (51) et qui est éloigné du deuxième palier (40).

9. Ensemble d'entraînement électrique selon la revendication 8, dans lequel la deuxième extrémité (133) est dotée d'un trou d'arbre (1331) dans une direction axiale, la troisième extrémité (231) est insérée dans le trou d'arbre (1331), l'ensemble d'entraînement électrique (100) comprend également un anneau de retenue (81), et l'anneau de retenue (81) est pris en tenaille entre une surface interne du trou d'arbre (1331) et une surface externe de la troisième extrémité (231).

10. Ensemble d'entraînement électrique selon la revendication 9, dans lequel une cannelure intérieure est disposée sur la surface interne du trou d'arbre (1331), une cannelure extérieure est disposée sur la surface externe de la troisième extrémité (231), et la cannelure intérieure est reliée à la cannelure extérieure.

11. Véhicule électrique (200), comprenant l'ensemble d'entraînement électrique (100) selon l'une quelconque des revendications 1 à 10.
